(19) Europäisches Patentamt
European Patent Office
Office européen des brevets

(11) EP 4 417 582 A1

(12) **EUROPEAN PATENT APPLICATION**
published in accordance with Art. 153(4) EPC

(43) Date of publication:
**21.08.2024 Bulletin 2024/34**

(21) Application number: **22881034.7**

(22) Date of filing: **12.10.2022**

(51) International Patent Classification (IPC):
***C02F 1/42*** (2023.01) ***B01J 41/07*** (2017.01)
***B01J 41/13*** (2017.01) ***H01M 8/04*** (2016.01)
***H01M 8/06*** (2016.01) ***H01M 8/10*** (2016.01)

(52) Cooperative Patent Classification (CPC):
**B01J 41/07; B01J 41/13; C02F 1/42; H01M 8/04; H01M 8/06; H01M 8/10;** Y02E 60/50

(86) International application number:
**PCT/JP2022/037992**

(87) International publication number:
**WO 2023/063339 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2021 JP 2021168381**

(71) Applicant: **AGC Inc.**
**Chiyoda-ku**
**Tokyo 100-8405 (JP)**

(72) Inventors:
- **SHIONO, Takeshi**
  **Tokyo 100-8405 (JP)**
- **HIRAI, Takeshi**
  **Tokyo 100-8405 (JP)**
- **ARINAMI, Yuko**
  **Tokyo 100-8405 (JP)**
- **TANABE, Kana**
  **Tokyo 100-8405 (JP)**
- **ISHITSUKA, Kei**
  **Tokyo 100-8405 (JP)**

(74) Representative: **Müller-Boré & Partner Patentanwälte PartG mbB**
**Friedenheimer Brücke 21**
**80639 München (DE)**

(54) **METHOD FOR PURIFYING TREATMENT TARGET SOLUTION**

(57) A method for purifying a treatment target solution which can remove a compound having an aliphatic hydrocarbon group which has at least one ionic group and a fluorine atom efficiently is provided.

The method for purifying a treatment target solution of the present invention comprises bringing a treatment target solution containing a compound having an aliphatic hydrocarbon group which has at least one ionic group selected from the group consisting of a carboxylic acid group and a sulfonic acid group, and a fluorine atom and may contain an oxygen atom, at least one acid selected from the group consisting of HF and $H_2SO_4$ and water, into contact with a resin having a tertiary amino group to remove the compound having an aliphatic hydrocarbon group from the treatment target solution.

Fig. 1

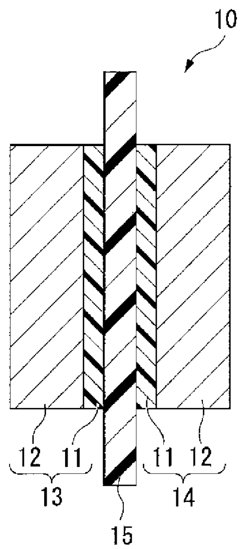


EP 4 417 582 A1

## Description

TECHNICAL FIELD

The present invention relates to a method for purifying treatment target solution.

BACKGROUND ART

A fuel cell comprises an anode and a cathode separated by an electrolyte membrane and generates electricity through an electrochemical reaction when a hydrogen-containing gas is supplied to the anode.

Patent Document 1 discloses use of an ion exchange filter comprising a resin having quaternary ammonium salt groups for removal of contaminants from unreacted fuel discharged from a fuel cell or removal of impurities from a cooling fluid used in a cooling system for a fuel cell.

A water electrolyzer comprises an anode and a cathode separated by an electrolyte membrane. When a voltage is applied between the anode and the cathode, water supplied to the anode side is split to generate oxygen on the anode and hydrogen on the cathode, which are collected separately. On the anode side, the oxygen is collected with excess water, and on the cathode side, the hydrogen is collected with water flowing in across the electrolyte membrane. The hydrogen and oxygen are separated from water by gas-liquid separation, and the water is recycled to the anode side of the water electrolyzer.

PRIOR ART DOCUMENTS

PATENT DOCUMENTS

Patent Document 1: Japanese Patent No. 5806205

DISCLOSURE OF INVENTION

TECHNICAL PROBLEM

Some fuel cells using a fluorinated polymer having ion exchange groups discharge a liquid resulting from the electrochemical reaction, and the liquid sometimes contains fluorine-containing compounds having an ionic group and an aliphatic hydrocarbon group resulting from chemical deterioration of the fluorinated polymer having ion exchange groups. In a water electrolyzer using a fluorinated polymer having ion exchange groups, the excess water discharged from the anode side and the water discharged from the cathode side sometimes contain fluorine-containing compounds having an ionic group and an aliphatic hydrocarbon group resulting from chemical deterioration of the fluorinated polymer having ion exchange groups. In recent years, removal of these compounds having an aliphatic hydrocarbon group is required.

The present inventors assessed the ability of such a resin having quaternary ammonium salt groups as described in Patent Document 1 to remove compounds having an aliphatic hydrocarbon group, and found that it need some improvement.

In view of the above, the present invention aims to provide a method for purifying a treatment target solution which can remove compounds having an aliphatic hydrocarbon group which has an ionic group and a fluorine atom.

SOLUTION TO PROBLEM

The present inventors have found the following solutions to the above-mentioned problem.

[1] A method for purifying a treatment target solution, which comprises bringing a treatment target solution containing a compound having an aliphatic hydrocarbon group which has at least one ionic group selected from the group consisting of a carboxylic acid group and a sulfonic acid group, and a fluorine atom and may contain an oxygen atom, at least one acid selected from the group consisting of HF and $H_2SO_4$ and water, into contact with a resin having a tertiary amino group to remove the compound having an aliphatic hydrocarbon group from the treatment target solution.

[2] The method for purifying a treatment target solution according to [1], wherein the treatment target solution is purified until the concentration of the compound having an aliphatic hydrocarbon group becomes 100 ppt or below.

[3] The method for purifying a treatment target solution according to [1] or [2], wherein the compound having an aliphatic hydrocarbon group is represented by the following formula (X):

Formula (X): $(HOOC)_m\text{-}L\text{-}(SO_3H)_n$

(wherein L is a (m+n)-valent aliphatic hydrocarbon group which contains a fluorine atom and may contain an oxygen atom, n is an integer of from 0 to 2, and m is an integer of from 0 to 3, provided that the sum of m and n is at least 1.)
[4] The method for purifying a treatment target solution according to [3], wherein m is 1, and n is 1.
[5] The method for purifying a treatment target solution according to [3], wherein m is 0, and n is 1.
[6] The method for purifying a treatment target solution according to [3], wherein m is 1, and n is 2.
[7] The method for purifying a treatment target solution according to any one of [1] to [6], wherein the treatment target solution is produced by an electrochemical reaction in a fuel cell or a water electrolyzer which comprises a fluorinated polymer having ion exchange groups.
[8] The method for purifying a treatment target solution according to [7], wherein the treatment target solution is produced by an electrochemical reaction in a fuel cell or a water electrolyzer which comprises a fluorinated polymer having ion exchange groups, and is discharged from the fuel cell or the water electrolyzer.
[9] The method for purifying a treatment target solution according to any one of [1] to [8], wherein the tertiary amino group is represented by $-NR^{N1}R^{N2}$ (wherein each of $R^{N1}$ and $R^{N2}$ is independently a monovalent group).
[10] The method for purifying a treatment target solution according to [9], wherein the monovalent group as $R^{N1}$ and $R^{N2}$ is an alkyl group, an alkenyl group, an aryl group, an acetyl group, a benzoyl group, a benzensulfonyl group or a tert-butoxycarbonyl group which may contain an etheric oxygen atom or a hydroxy group.
[11] The method for purifying a treatment target solution according to [9] or [10], wherein each of $R^{N1}$ and $R^{N2}$ independently has from 1 to 10 carbon atoms.
[12] The method for purifying a treatment target solution according to any one of [1] to [11], wherein the resin having a tertiary amino group is based on at least one of a styrene resin and a (meth)acrylic resin.
[13] The method for purifying a treatment target solution according to any one of [1] to [12], wherein the treatment target solution is passed through a container packed with the resin having a tertiary amino group by feeding the treatment target solution into the container at a throughput speed SV of from 1 $Hr^{-1}$ to 400 $Hr^{-1}$, which is represented by the following formula.

$$SV\ (Hr^{-1}) = \text{Feed rate}\ (mL \cdot Hr^{-1})\ /\ \text{Resin volume}\ (mL)$$

[14] The method for purifying a treatment target solution according to [13], wherein the throughput speed SV is set so that the concentration of the fluoroalkyl compound having an ionic group is at most 100 ppt when the total feed BV of the treatment target solution, which is represented by the following formula, reaches 20,000.

$$BV = \text{Total feed}\ (mL)\ /\ \text{Resin volume}\ (mL)$$

ADVANTAGEOUS EFFECTS OF INVENTION

According to the present invention, it is possible to provide a method for purifying a treatment target solution which can remove a compound having an aliphatic hydrocarbon group which has an ionic group and a fluorine atom efficiently.

BRIEF DESCRIPTION OF DRAWINGS

[Fig. 1] A schematic sectional view of an embodiment of a membrane electrode assembly used in a fuel cell or a water electrolyzer.

DESCRIPTION OF EMBODIMENTS

The terms used in the present invention have the following meanings.
An "ion exchange group" is a group containing at least one ion which can be exchanged with a different ion, such as a sulfonic acid functional group and a carboxylic acid functional group, which will be mentioned below.
A "sulfonic acid functional group" means a sulfonic acid group ($-SO_3H$) or a sulfonate group ($-SO_3M^2$, where $M^2$ is an alkali metal or a quaternary ammonium cation).
A "carboxylic acid functional group" means a carboxylic acid group (-COOH) or a carboxylate group (-COOM1, where $M^1$ is an alkali metal or a quaternary ammonium cation).

An "aliphatic hydrocarbon group" means an aliphatic group consisting of carbon atoms and hydrogen atoms, such as an alkyl group, an alkylene group, an alkenyl group and an alkynyl group.

A "unit" in a polymer mean an atomic group derived from one molecule of a monomer by polymerization. A unit may be an atomic group directly formed by a polymerization reaction, or may be an atomic group having a partially different structure obtained by polymerization followed by partial modification.

A numerical range expressed by using "to" includes the figures before and after "to" as the lower limit and the upper limit. In a series of numerical ranges mentioned herein, the upper limit or lower limit of a numerical range may be replaced by the upper limit or lower limit of another numerical range in the same series. The upper limit or lower limit of any numerical range herein may be replaced by a figure in the Examples.

When a component of the treatment target solution comprises two or more substances which fall into the same category, the content of the component is the total content of the substances, unless otherwise noted.

The unit "ppm" of concentration in solution means "mg/L", "ppb" means "μg/L", and "ppt" means "ng/L".

[Method for Purifying Treatment Target Solution]

The method of the present invention for purifying a treatment target solution (hereinafter referred to as "the purification method of the present invention") comprises a purification step which comprises bringing a treatment target solution containing a compound having an aliphatic hydrocarbon group which has at least one ionic group selected from the group consisting of a carboxylic acid group and a sulfonic acid group, and a fluorine atom and may contain an oxygen atom (hereinafter referred to as an "aliphatic hydrofluorocarbon compound having an ionic group"), at least one acid selected from the group consisting of HF and $H_2SO_4$ (hereinafter referred to as a "specific acid") and water, into contact with a resin having a tertiary amino group (hereinafter referred to as a "specific resin") to remove the aliphatic hydrofluorocarbon compound having an ionic group from the treatment target solution.

The purification method of the present invention can remove the aliphatic hydrofluorocarbon having an ionic group efficiently, presumably, though not for sure yet, for the following reason.

The specific acid in the treatment target solution to be used in the purification method of the present invention lowers the pH of the treatment target solution and thereby facilitates protonation of the tertiary amino groups in the specific resin. As the protonated amino groups form ion pairs with the anion of the specific acid, the anion exchange ability of the specific resin improves.

[Treatment Target Solution]

The treatment target solution used in the purification method of the present invention comprises an aliphatic hydrofluorocarbon compound having an ionic group, a specific acid and water.

<Aliphatic Hydrofluorocarbon Compound Having an Ionic Group>

As mentioned above, an aliphatic hydrofluorocarbon compound having an ionic group means a compound having an aliphatic hydrocarbon group which has at least one ionic group selected from the group consisting of a carboxylic acid group and a sulfonic acid group, and a fluorine atom and may contain an oxygen atom.

When the aliphatic hydrofluorocarbon compound having an ionic group contains an oxygen atom, the oxygen atom may be an etheric oxygen atom (-O-), an oxygen atom in a hydroxy group (-OH) or an oxygen atom in a carbonyl group (-C(=O)), and is preferably an etheric oxygen atom (-O-).

The aliphatic hydrofluorocarbon compound having an ionic group is preferably a compound represented by the formula (X) for easy removal in the purification step.

Formula (X): $(HOOC)_m\text{-}L\text{-}(SO_3H)_n$

In the formula (X), L is a (m+n)-valent aliphatic hydrocarbon group which contains a fluorine atom and may contain an oxygen atom, preferably a (m+n)-valent aliphatic hydrocarbon group which contains a fluorine atom and an oxygen atom.

The aliphatic hydrocarbon group may be a saturated hydrocarbon group or an unsaturated hydrocarbon group, and is preferably a saturated hydrocarbon group.

The aliphatic hydrocarbon group may be linear, branched or cyclic, and is preferably linear or branched.

The number of carbon atoms in the aliphatic hydrocarbon group is preferably at least 1, more preferably at least 2, further preferably at least 5, and is preferably at most 20, more preferably at most 18, further preferably at most 14.

In the aliphatic hydrocarbon group, at least one hydrogen atom is replaced by fluorine atom(s), and all the hydrogen atoms may be replaced by fluorine atoms.

When the aliphatic hydrocarbon group has an oxygen atom, the oxygen atom may be an etheric oxygen atom (-O-), an oxygen atom in a hydroxy group (-OH) or an oxygen atom in a carbonyl group (-C(=O)), and is preferably an etheric oxygen atom.

The number of etheric oxygen atoms, if present, in the aliphatic hydrocarbon group may be 1 or at least 2, and is preferably at most 4. The etheric oxygen atom is preferably present between carbon atoms in the aliphatic hydrocarbon group.

In the formula (X), n is an integer of from 0 to 2, and is preferably 1 or 2.

In the formula (X), m is an integer of from 0 to 3.

However, in the formula (X), the sum of m and n is at least 1.

The compound represented by the formula (X) is preferably a compound wherein m is 1, and n is 1, for easy removal in the purification step.

As the compound represented by the formula (X), a compound wherein m is 0, and n is 1 is also preferred.

As the compound represented by the formula (X), a compound wherein m is 1, and n is 2 is also preferred.

Examples of the aliphatic hydrofluorocarbon compound having an ionic group are shown below.

$CF_3$-$SO_3H$

H-$CF_2$-$SO_3H$

HO-$CF_2$-$SO_3H$

$CF_3$-COOH

$CF_3$-O-COOH

H-$CF_2$-COOH

H-$CF_2$-O-COOH

HO-$CF_2$-COOH

HO-$CF_2$-O-COOH

$CF_3$-$CF_2$-$SO_3H$

$CH_3$-$CF_2$-$SO_3H$

H-$CF_2$-$CF_2$-$SO_3H$

HO-$CF_2$-$CF_2$-$SO_3H$

HO-$CH_2$-$CF_2$-$SO_3H$

HOC-$CF_2$-$SO_3H$

FOC-$CF_2$-$SO_3H$

HOOC-$CF_2$-$SO_3H$

$CF_3$-$CF_2$-COOH

$CF_3$-$CH_2$-COOH

$CF_3$-CHF-COOH

$CF_3$-$CF_2$-O-COOH

$CF_3$-$CH_2$-O-COOH

$CF_3$-CHF-O-COOH

HO-$CF_2$-$CF_2$-O-COOH

HO-$CH_2$-$CF_2$-O-COOH

FOC-$CF_2$-O-COOH

HOC-$CF_2$-O-COOH

$CH_3$-$CF_2$-O-COOH

$CF_3$-$CF_2$-O-COOH

H-$CF_2$-$CF_2$-O-COOH

$CF_3$-CF(OH)-COOH

$CF_3$-CH(OH)-COOH

$CF_3$-CF(OH)-O-COOH

$CF_3$-CH(OH)-O-COOH

$CF_3$-O-$CF_2$-COOH

$CH_3$-O-$CF_2$-COOH

FOC-O-$CF_2$-COOH

H-$CF_2$-O-$CF_2$-COOH

HO-$CH_2$-O-$CF_2$-COOH

HOC-O-$CF_2$-COOH

$CF_3$-C(=O)-O-COOH

$CH_3$-O-$CF_2$-$CF_2$-$SO_3$H

HO-$CH_2$-O-$CF_2$-$CF_2$-$SO_3$H

FOC-O-$CF_2$-$CF_2$-$SO_3$H

HOC-O-$CF_2$-$CF_2$-$SO_3$H

$CH_3$-$CF_2$-$CF_2$-$SO_3$H

H-$CF_2$-$CF_2$-$CF_2$-$SO_3$H

HO-$CF_2$-O-$CF_2$-$CF_2$-$SO_3$H

FOC-O-$CF_2$-$CF_2$-$SO_3$H

HOC-O-$CF_2$-$CF_2$-$SO_3$H

HO-$CH_2$-O-$CF_2$-$CF_2$-$SO_3$H

$CH_3-O-CF_2-CF_2-SO_3H$

$H-CF_2-O-CF_2-CF_2-SO_3H$

$CF_3-O-CF_2-CF_2-SO_3H$

$HOOC-O-CF_2-CF_2-SO_3H$

$HOOC-O-CF_2-COOH$

$HO-CF(CF_2-SO_3H)-CF_2-SO_3H$

$O=C(CF_2-SO_3H)-CF_2-SO_3H$

$HO-CH(CF_2-SO_3H)-CF_2-SO_3H$

$H-CH(CF_2-SO_3H)-CF_2-SO_3H$

$H-CF(CF_2-SO_3H)-CF_2-SO_3H$

$F-CF(CF_2-SO_3H)-CF_2-SO_3H$

$CF_3-CF_2-CF_2-COOH$

$H-CF_2-O-CF(CF_3)-COOH$

$HO-CF_2-O-CF(CF_3)-COOH$

$HO-CH_2-O-CF(CF_3)-COOH$

$CF_3-O-CF(CF_3)-COOH$

$CH_3-O-CF(CF_3)-COOH$

$HOC-O-CF(CF_3)-COOH$

$FOC-O-CF(CF_3)-COOH$

$CF_3-CF_2-O-CF_2-COOH$

$CF_3-CH_2-O-CF_2-COOH$

$CF_3-CHF-O-CF_2-COOH$

$CF_3-CF(CF_3)-O-COOH$

$CH_3-CF(CF_3)-O-COOH$

$H-CF_2-CF(CF_3)-O-COOH$

$HO-CF_2-CF(CF_3)-O-COOH$

$HO-CH_2-CF(CF_3)-O-COOH$

$FOC-CF(CF_3)-O-COOH$

$HOC-CF(CF_3)-O-COOH$

$HO-CF(CF_3)-O-CF_2-COOH$

$HO-CH(CF_3)-O-CF_2-COOH$

$CF_3-C(=O)-O-CF_2-COOH$

$HO-CF_2-CF_2-CF_2-CF_2-SO_3H$

$FOC-CF_2-CF_2-CF_2-SO_3H$

$HOC-CF_2-CF_2-CF_2-SO_3H$

$HO-CH_2-CF_2-CF_2-CF_2-SO_3H$

$CH_3-CF_2-CF_2-CF_2-SO_3H$

$H-CF_2-CF_2-CF_2-CF_2-SO_3H$

$CF_3-CF_2-CF_2-CF_2-SO_3H$

$CF_3-CF_2-O-CF_2-CF_2-SO_3H$

$CF_3-CH_2-O-CF_2-CF_2-SO_3H$

$CF_3-CHF-O-CF_2-CF_2-SO_3H$

$HO-CF(CF_3)-O-CF_2-CF_2-SO_3H$

$HO-CH(CF_3)-O-CF_2-CF_2-SO_3H$

$H-CF(CF_3)-O-CF_2-CF_2-SO_3H$

$CF_3-C(=O)-O-CF_2-CF_2-SO_3H$

$HOOC-CF(CF_3)-O-COOH$

$HOOC-CF_2-CF_2-CF_2-SO_3H$

$HO-CF_2-O-CF(CF_2-SO_3H)-CF_2-SO_3H$

$FOC-O-CF(CF_2-SO_3H)-CF_2-SO_3H$

$HOOC-O-CF(CF_2-SO_3H)-CF_2-SO_3H$

$HOC-O-CF(CF_2-SO_3H)-CF_2-SO_3H$

$HO-CH_2-O-CF(CF_2-SO_3H)-CF_2-SO_3H$

$CH_3-O-CF(CF_2-SO_3H)-CF_2-SO_3H$

$H-CF_2-O-CF(CF_2-SO_3H)-CF_2-SO_3H$

$F-CF_2-O-CF(CF_2-SO_3H)-CF_2-SO_3H$

$CF_3-CF_2-CF_2-CF_2-COOH$

$HO-CF_2-CF(CF_3)-O-CF_2-COOH$

$FOC-CF(CF_3)-O-CF_2-COOH$

$HOC-CF(CF_3)-O-CF_2-COOH$

$HO-CH_2-CF(CF_3)-O-CF_2-COOH$

$CH_3-CF(CF_3)-O-CF_2-COOH$

$H-CF_2-CF(CF_3)-O-CF_2-COOH$

$CF_3-CF(CF_3)-O-CF_2-COOH$

$HO-CF_2-CF_2-O-CF(CF_3)-COOH$

$FOC-CF_2-O-CF(CF_3)-COOH$

$HOC-CF_2-O-CF(CF_3)-COOH$

$HO-CH_2-CF_2-O-CF(CF_3)-COOH$

$CH_3-CF_2-O-CF(CF_3)-COOH$

$H-CF_2-CF_2-O-CF(CF_3)-COOH$

$CF_3-CF_2-O-CF(CF_3)-COOH$

$CF_3-CF(CF_3)-O-CF_2-CF_2-SO_3H$

$CH_3-CF(CF_3)-O-CF_2-CF_2-SO_3H$

$FOC-CF(CF_3)-O-CF_2-CF_2-SO_3H$

$H-CF_2-CF(CF_3)-O-CF_2-CF_2-SO_3H$

$HOC-CF(CF_3)-O-CF_2-CF_2-SO_3H$

$HO-CF_2-CF(CF_3)-O-CF_2-CF_2-SO_3H$

$HO-CH_2-CF(CF_3)-O-CF_2-CF_2-SO_3H$

$HOOC-CF(CF_3)-O-CF_2-CF_2-SO_3H$

$HOOC-CF(CF_3)-O-CF_2-COOH$

$CF_3-CF_2-CF_2-CF_2-CF_2-COOH$

$CF_3-CF_2-CF_2-CF_2-CF_2-CF_2-COOH$

$HOOC-CF_2-CF_2-CF_2-CF_2-CF_2-CF_2-H$

$HOOC-CF_2-CF_2-CF_2-CF_2-CF_2-CF_3$

$HOOC-CF_2-CF_2-CF_2-CF_2-CF_2-CH_2-OH$

$HOOC-CF_2-CF_2-CF_2-CF_2-CF_2-CH_3$

$HOOC-CF_2-CF_2-CF_2-CF_2-CF_2-COH$

$HOOC-CF_2-CF_2-CF_2-CF_2-CF_2-COOH$

$CF_3-CF_2-CF_2-CF_2-CF_2-CF_2-CF_2-COOH$

$HOOC-CF_2-CF_2-CF_2-CF_2-CF_2-CF_2-COOH$

$HOOC-CF_2-CF_2-CF_2-CF_2-CF_2-CF_2-COH$

$HOOC-CF_2-CF_2-CF_2-CF_2-CF_2-CF_2-CH_2-OH$

$HOOC-CF_2-CF_2-CF_2-CF_2-CF_2-CF_2-CH_3$

$HOOC-CF_2-CF_2-CF_2-CF_2-CF_2-CF_2-CF_2-H$

$HOOC-CF_2-CF_2-CF_2-CF_2-CF_2-CF_2-CF_3$

$HOOC-CF_2-CF_2-CF_2-CF_2-CF_2-CF_2-CF_2-COOH$

$HOOC-CF_2-CF_2-CF_2-CF_2-CF_2-CF_2-CF_2-COH$

$HOOC-CF_2-CF_2-CF_2-CF_2-CF_2-CF_2-CF_2-CH_2-OH$

$HOOC-CF_2-CF_2-CF_2-CF_2-CF_2-CF_2-CF_2-CH_3$

$HOOC-CF_2-CF_2-CF_2-CF_2-CF_2-CF_2-CF_2-CF_2-H$

$HOOC-CF_2-CF_2-CF_2-CF_2-CF_2-CF_2-CF_2-CF_3$

$HOOC-CF_2-CF_2-CF_2-CF_2-CF_2-CF_2-CF_2-CF_2-COOH$

$HOOC-CF_2-CF_2-CF_2-CF_2-CF_2-CF_2-CF_2-CF_2-COH$

$HOOC-CF_2-CF_2-CF_2-CF_2-CF_2-CF_2-CF_2-CF_2-CH_2-OH$

$HOOC-CF_2-CF_2-CF_2-CF_2-CF_2-CF_2-CF_2-CF_2-CH_3$

$HOOC-CF_2-CF_2-CF_2-CF_2-CF_2-CF_2-CF_2-CF_2-CF_2-H$

$HOOC-CF_2-CF_2-CF_2-CF_2-CF_2-CF_2-CF_2-CF_2-CF_3$

$HO-CF_2-CF(CF_2-O-CF_2-CF_2-SO_3H)-O-CF_2-CF_2-SO_3H$

$FOC-CF(CF_2-O-CF_2-CF_2-SO_3H)-O-CF_2-CF_2-SO_3H$

$HOOC-CF(CF_2-O-CF_2-CF_2-SO_3H)-O-CF_2-CF_2-SO_3H$

$HOC-CF(CF_2-O-CF_2-CF_2-SO_3H)-O-CF_2-CF_2-SO_3H$

$HO-CH_2-CF(CF_2-O-CF_2-CF_2-SO_3H)-O-CF_2-CF_2-SO_3H$

$CH_3-CF(CF_2-O-CF_2-CF_2-SO_3H)-O-CF_2-CF_2-SO_3H$

$H-CF_2-CF(CF_2-O-CF_2-CF_2-SO_3H)-O-CF_2-CF_2-SO_3H$

$CF_3-CF(CF_2-O-CF_2-CF_2-SO_3H)-O-CF_2-CF_2-SO_3H$

$HO_3S-CF_2-CF_2-O-CF(CF_3)-CF_2-CF_2-CF_2-CF_2-O-CF_2-CF(CF_3)-O-CF_2-CF_2-SO_3H$

$$HO_3S\text{-}CF_2\text{-}CF_2\text{-}O\text{-}CF(CF_3)\text{-}CF_2\text{-}O\text{-}CF_2\text{-}CF_2\text{-}CF(CHF_2)\text{-}O\text{-}CF_2\text{-}CF(CF_3)\text{-}O\text{-}CF_2\text{-}CF_2\text{-}SO_3H$$

$$HO_3S\text{-}CF_2\text{-}CF_2\text{-}O\text{-}CF(CF_3)\text{-}CF_2\text{-}O\text{-}CF_2\text{-}CF_2\text{-}CF(CF_3)\text{-}O\text{-}CF_2\text{-}CF(CF_3)\text{-}O\text{-}CF_2\text{-}CF_2\text{-}SO_3H$$

The aliphatic hydrofluorocarbon compound having an ionic group may be a single species or may be a combination of two or more species.

The concentration of the aliphatic hydrofluorocarbon compound having an ionic group in the treatment target solution is preferably at least 0.2 ppb, more preferably at least 0.3 ppb, further preferably at least 0.5 ppb, and is preferably at most 1,000 ppb, more preferably at most 100 ppb, further preferably at most 10 ppb.

<Specific Acid>

The specific acid is at least one acid selected from the group consisting of HF and $H_2SO_4$. The treatment target solution may contain either HF or $H_2SO_4$, and may contain both of them, and preferably contains both of them for easy removal of the aliphatic hydrofluorocarbon compound having an ionic group.

The specific acid may be dissociated into ions in the treatment target solution.

The concentration of the specific acid in the treatment target solution is at least 0.1 ppb, more preferably at least 1 ppb, further preferably at least 5 ppb, for easy removal of the aliphatic hydrofluorocarbon compound having an ionic group, and is preferably at most 100 ppm, more preferably at most 10 ppm, further preferably at most 1 ppm, so that $F^-$ and $SO_4^{2-}$ do not interfere with adsorption of the aliphatic hydrofluorocarbon compound having an ionic group.

<Water>

The content of water in the treatment target solution is preferably at least 900 g/L, more preferably at least 990 g/L, further preferably at least 999 g/L, and is preferably at less than 1,000 g/L.

<Additional Components>

The treatment target solution may contain additional components such as metal ions and chloride ions in addition to the aliphatic hydrofluorocarbon compound having an ionic group, the specific acid and water.

The concentration of additional components, if present, in the treatment target solution is preferably at most 100,000 ppm, more preferably at most 10,000 ppm, further preferably at most 1,000 ppm.

The pH of the treatment target solution is preferably at least 1, more preferably at least 2, further preferably at least 3, and is preferably lower than 7.

<Treatment Target Solution>

The treatment target solution may be a solution obtained by mixing the above-mentioned components and may be a solution produced by an electrochemical reaction in a fuel cell or a water electrolyzer which comprises a fluorinated polymer having ion exchange groups. Such a solution is a solution of an aliphatic hydrofluorocarbon compound having an ionic group and a specific acid in the water produced by an electrochemical reaction in a fuel cell or a water electrolyzer. The aliphatic hydrofluorocarbon compound having an ionic group and the specific are supposed to be produced by decomposition of a fluorinated polymer having ion exchange groups in a material used in the fuel cell or the water electrolyzer or be dissolved from such a fluorinated polymer having ion exchange groups.

When the treatment target solution is solution produced by an electrochemical reaction in a fuel cell or a water electrolyzer which comprises a fluorinated polymer having ion exchange groups, the treatment target solution may be recycled in the system constituting a fuel cell system or a water electrolyzer after the purification step or discharged from the system, and is preferably discharged from the system for the sake of simplicity of the system.

The system constituting a fuel cell comprises a cell stack, feed, recycle and humidity controlling units s for the anode gas and the cathode gas, and feed and recycle units for a stack coolant, and, optionally a fuel reforming unit when reformed hydrogen is used. The system constituting a water electrolyzer comprises a cell stack, feed and humidity controlling units for the fluid fed to the cell stack, feed and recycle units for a stack coolant, a recovery unit for a fluid discharged from the cell stack, and a recycle unit for feeding the water discharged from the cell stack to the cell stack.

[Specific Resin]

The resin having tertiary amino groups, which is referred to as a specific resin as mentioned previously, is an anion exchange resin and is used to remove an aliphatic hydrofluorocarbon compound having an ionic group from the

treatment target solution.

A tertiary amino group is a di-substituted amino group represented by $-NR^{N1}R^{N2}$ (wherein each of $R^{N1}$ and $R^{N2}$ is independently a monovalent substituent).

Each of $R^{N1}$ and $R^{N2}$ may, for example, be an alkyl group, an alkenyl group, an aryl group, an acetyl group, a benzoyl group, a benzenesulfonyl group or a tert-butoxycvarbonyl group which may contain an etheric oxygen atom or a hydroxy group, preferably an alkyl group or an alkenyl group, more preferably an alkyl group. The number of carbon atoms in each of $R^{N1}$ and $R^{N2}$ is preferably at least 1, and preferably at most 10, more preferably at most 6, further preferably at most 5.

Specific examples of a tertiary amino group include dimethylamino group, a diethylamino group, a dipropylamino group, a dibutylamino group, an ethylmethylamino group, a diphenylamino group and a methylphenylamino group.

The base resin for the specific resin may be a styrene resin, a (meth)acrylic resin or a mixture thereof.

The styrene resin may, for example, be a crosslinked copolymer of a styrene monomer such as styrene, ethylstyrene or methylstyrene and a crosslinking agent such as divinylbenzene or trivinylbenzene, preferably a crosslinked copolymer of styrene and divinylbenzene.

The (meth)acrylic resin may, for example, be a crosslinked copolymer of a monomer having a (meth)acryloyl group such as ethyl acrylate, methyl (meth)acrylate or glycidyl (meth)acrylate and a crosslinking agent such as ethylene glycol di(meth)acrylate, polyethylene glycol di(meth)acrylate, divinylbenzene, or trivinylbenzene, preferably a crosslinked copolymer of an acrylate ester and divinylbenzene.

The specific resin may be in any shape such as beads, fiber, particles, membrane or hollow fiber, and is preferably in the shape of beads in view of cost and easy resin replacement.

The specific resin may have any structure such as a gel structure, a porous structure or a high porous structure, and preferably has a gel structure or a porous structure in view of mechanical strength and removal efficiency.

The specific resin may be a commercially available resin such as DIAION™ WA30 and WA10 (manufactured by Mitsubishi Chemical Corporation) and Amberlite™ IRA478RF, IRA67, IRA96SB, IRA98 and XE583 (manufactured by ORGANO CORPORATION).

[Purification Step]

In the purification step, the treatment target solution is brough into contact with the specific resin to remove an aliphatic hydrofluorocarbon compound having an ionic group from the treatment target solution.

The treatment target solution is brough into contact with the specific resin, for example, by stirring a mixture of the specific resin and the treatment target solution or by passing the treatment target solution through a package (such as a column) packed with the specific resin, and the latter is preferred in view of purification efficiency.

Now, the purification step will be described in reference to a column packed with the specific resin.

When the treatment target solution is passed through a package (such as a column) packed with the specific resin, the throughput speed SV of the treatment target solution is preferably at least 1 $Hr^{-1}$, more preferably at least 10 $Hr^{-1}$, further preferably at least 100 $Hr^{-1}$, to increase the throughput speed relative to the amount of the specific resin or to decrease the amount of the specific resin to be used, and is preferably at most 400 $Hr^{-1}$, mor preferably at most 300 $Hr^{-1}$, further preferably at most 200 $Hr^{-1}$ to remove an aliphatic hydrofluorocarbon compound having an ionic group efficiently.

Herein, the throughput speed SV means the feed rate of the treatment target solution relative to the volume of the specific resin (resin volume) and indicates a throughput capacity per hour (Hr). It is represented by the following formula.

$$SV\ (Hr^{-1}) = \text{Feed rate}\ (mL \cdot Hr^{-1})\ /\ \text{Resin volume}\ (mL)$$

Herein, the resin volume is the volume of a specific resin in water in a measuring cylinder measured after at least 12 hours of soaking in water at 23°C and tapping to constant resin bed height.

In the purification using a column packed with the specific resin, after the total feed of the treatment target solution reaches a certain level, the specific resin decreases in removal efficiency, and the concentration of the aliphatic hydrofluorocarbon compound having an ionic group in the effluent starts to increase as compared with the initial effluent (the phenomenon called "breakthrough"). The total feed of the treatment target solution at breakthrough depends on the amount of the specific resin in the column. The throughput speed SV is set so that the concentration of the aliphatic hydrofluorocarbon compound having an ionic group in the effluent is kept at most 100 ppt preferably until BV, which expresses the total feed of the treatment target solution, reaches 20,000, more preferably until BV reaches 60,000, further preferably until BV reaches 200,000.

Herein, the throughput BV is the total feed of the treatment target solution relative to the volume of the specific

resin (resin volume) and is represented by the following formula.

$$BV = \text{Total feed of the treatment target solution (mL)} / \text{Resin volume (mL)}$$

The temperature of the treatment target solution to be passed through a column is preferably at least 0°C, more preferably at least 10°C, further preferably at least 20°C in view of more efficient removal of the aliphatic hydrofluorocarbon compound having an ionic group, and is preferably at most 130°C, more preferably at most 120°C, further preferably at most 100°C in view of heat resistance of the specific resin.

The length of the bed of the specific resin in the column is preferably at least 3 cm, more preferably at least 5 cm, further preferably at least 10 cm in view of efficient removal of the aliphatic hydrofluorocarbon compound having an ionic group, and is preferably at most 1,000 cm, more preferably at most 500 cm, further preferably at most 100 cm to reduce the column volume.

The column may be linear or curved. A linear column is preferred in view of uniform flow of the solution in the column, and a curved column is also preferred to reduce the column volume and remove the fluoroalkyl compound having an ionic group more efficiently.

The inner wall of the column may be made of such a material as a metal, glass, a hydrocarbon resin or a fluororesin. Hydrocarbon resins and fluororesins such as polyethylene, polypropylene and PFA (copolymer of tetrafluoroethylene and perfluoroalkoxyethylene) are preferred in view of their good corrosion resistance. When weather resistance and mechanical strength are important, metals are is preferred, and above all, stainless steel (such as SUS 304 and SUS 316) is preferred.

In the purification step, it is preferred to purify the treatment target solution until the concentration of the aliphatic hydrofluorocarbon compound having an ionic group in the purified solution (hereinafter referred to "effluent") lowers to 100 ppt or below, preferably to 70 ppt or below, more preferably to 50 ppt or below.

In the purification step, not only the aliphatic hydrofluorocarbon compound having an ionic group, but also the anion in the specific acid is removed.

In the purification step, it is preferred to repeat purification until the concentration of the anion in the specific acid in the effluent lowers to 20 ppb or below, more preferably to 10 ppb or below, further preferably to 5 ppb or below.

The purification step may be carried out only once, or may be carried out twice or more. The former means that the treatment target solution is brought into contact with the specific resin only once. The latter means that the effluent in the first purification is brought contact with the same specific resin or a different specific resin again or twice or more. For example, the purification step may be carried out repeatedly by circulating the treatment target solution by pumping or applying pressure in a circulation system comprising a column packed with a specific resin, a reservoir tank for the treatment target solution and pipes connecting them in a circle. The number of the purification step is preferably one for simplicity of the purification facility, and it is more preferred to passing the treatment target solution through a containing (such as a column) packed with the specific resin only once.

When the treatment target solution contains metal ions or metal compounds such as metal oxides, the specific resin may not be able to remove the aliphatic hydrofluorocarbon compound having an ionic group in the treatment target solution efficiently because the aliphatic hydrofluorocarbon compound having an ionic group forms metal salts with such compounds. Therefore, it is preferred to remove metal ions from the treatment target solution.

The metal ions in the treatment target solution may be removed, for example, by bringing the treatment target solution into contact with a cation exchange resin before the purification step, or by bringing the treatment target solution into contact with a mixture of a cation exchange resin and the specific resin in the purification step. The former is preferable in view of efficient removal of the aliphatic hydrofluorocarbon compound having an ionic group, and the latter is preferable in view of simplicity of the facility.

[Other Steps]

The purification method of the present invention may comprise steps other than the purification step.

Examples of such steps are a step of washing the specific resin with water (for example, by bringing the specific resin into contact with pure water or deionized water) before the purification step and a degassing step of replacing the gas in the specific resin by water (for example, by soaking the specific resin under a vacuum created using a vacuum pump or soaking the specific resin in water with tapping) before the purification step (hereinafter referred to "pretreatment steps"). Pretreatment steps enable the specific resin to remove the aliphatic hydrofluorocarbon compound having an ionic group more efficiently.

[Fluorinated polymer having ion exchange groups]

As mentioned above, the treatment target solution may be a solution produced by an electrochemical reaction in a fuel cell or a water electrolyzer which comprises a fluorinated polymer having ion exchange groups (hereinafter referred to as a "fluorinated polymer (I)").

The fluorinated polymer (I) may be contained in the electrolyte membrane or an electrode (an anode or a cathode) of a fuel cell or a water electrolyzer.

The ion exchange groups in the fluorinated polymer (I) are, for example, be sulfonic acid functional groups or carboxylic acid functional groups, and are preferably sulfonic acid functional groups.

Hereinafter, a fluorinated polymer having sulfonic acid functional groups (hereinafter referred to also as a "fluorinated polymer (S)") will be discussed mainly.

The fluorinated polymer (S) preferably comprises units based on a fluoroolefin and units based on a fluorine-containing olefin having a sulfonic acid functional group.

The fluoroolefin may, for example, be a $C_{2-3}$ fluoroolefin having at least one fluorine atom in the molecule. Specific examples of the fluoroolefin include tetrafluoroethylene (hereinafter referred to also as "TFE"), chlorotrifluoroethylene, vinylidene fluoride, vinyl fluoride and hexafluoropropylene. Among them, TFE is preferred in view of the production cost of the monomer, the reactivity with other monomers and the ability to give an excellent fluorinated polymer (S).

The fluoroolefin may be a single species or a combination of two or more species.

The units based on a fluorine-containing olefin having a sulfonic acid functional group are preferably units represented by the formula (1).

Formula(1) $-[CF_2-CF(-L^1-(SO_3M)_n)]-$

$L^1$ is a (n+1)-valent perfluorinated hydrocarbon group which may contain an etheric oxygen atom.

The etheric oxygen atom may be located at the end of the perfluorinated hydrocarbon group or between carbon atoms.

The number of carbon atoms in the (n+1)-valent perfluorinated hydrocarbon group is preferably at least 1, more preferably at least 2 and is preferably at most 20, more preferably at most 10.

$L^1$ is preferably a (n+1)-valent perfluorinated aliphatic hydrocarbon group which may contain an etheric oxygen atom, particularly preferably a divalent perfluoroalkylene group which may contain an oxygen atom when n = 1 or a trivalent aliphatic perfluorohydrocarbon group which may contain an oxygen atom when n = 2.

The divalent perfluoroalkylene group may be linear or branched.

M is a hydrogen atom, an alkali metal or a quaternary ammonium cation.

n is an integer of 1 or 2.

The units represented by the formula (1) are preferably units represented by the formula (1-1), units represented by the formula (1-2), units represented by the formula (1-3) or units represented by the formula (1-4).

Formula (1-1) $-[CF_2-CF(-O-R^{f1}-SO_3M)]$

Formula (1-2) $-[CF_2CF(-R^{f1}-SO_3M)]$

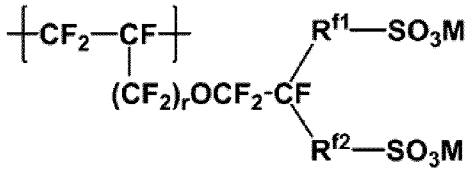

Formula (1-3)

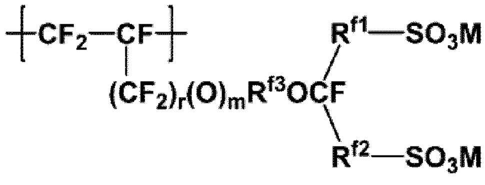

Formula (1-4)

$R^{f1}$ is a perfluoroalkylene group which may contain an etheric oxygen atom. The number of carbon atoms in the perfluoroalkylene group is preferably at least 1, more preferably at least 2, and preferably at most 20, more preferably at most 10.

$R^{f2}$ is a single bond or a perfluoroalkylene group which may contain an etheric oxygen atom. The number of carbon atoms in the perfluoroalkylene group is preferably at least 1, more preferably at least 2, and preferably at most 20, more preferably at most 10.

$R^{f3}$ is a single bond or a perfluoroalkylene group which may contain an etheric oxygen atom. The number of carbon atoms in the perfluoroalkylene group is preferably at least 1, more preferably at least 2, and preferably at most 20, more preferably at most 10.

r is an integer of 0 or 1.

m is an integer of 0 or 1.

M is a hydrogen atom, an alkali metal or a quaternary ammonium cation. When two or more M's are present, each M may be identical or different.

The units represented by the formula (1-1) and the units represented by the formula (1-2) are more preferably units represented by the formula (1-5).

Formula (1-5) $-[CF_2-CF(-(CF_2)_x-(OCF_2CFY)_y-O-(CF_2)_z-SO_3M)]-$

x is an integer of 0 or 1, y is an integer of from 0 to 2, z is an integer of from 1 to 4, and Y is F or $CF_3$. M is the same as defined above.

Specific examples of units represented by the formula (1-1) include the following units wherein w is an integer of from 1 to 8, x is an integer of from 1 to 5, and M is the same as defined above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

More specific examples of units represented by the formula (1-1) include the following units

$-[CF_2-CF(-O-(CF_2)_2-SO_3H)]-$

$-[CF_2-CF(-O-(CF_2)_4-SO_3H)]-$

$-[CF_2-CF(-O-CF_2CF(CF_3)-O-(CF_2)_2-SO_3H)]-$

Specific examples of units represented by the formula (1-2) include the following units wherein w is an integer of from 1 to 8, and M is the same as defined above.

$-[CF_2-CF(-(CF_2)_w-SO_3M)]-$

$-[CF_2-CF(-CF_2-O-(CF_2)_w-SO_3M)]-$

More specific examples of units represented by the formula (1-2) include the following units.

$-[CF_2-CF(-(CF_2)_2-SO_3H)]-$

$-[CF_2-CF(-(CF_2)_4-SO_3H)]-$

$-[CF_2-CF(-CF_2-O-(CF_2)_2-SO_3H)]-$

The units represented by the formula (1-3) are preferably units represented by the formula (1-3-1) wherein M is the same as defined above.

[0072]

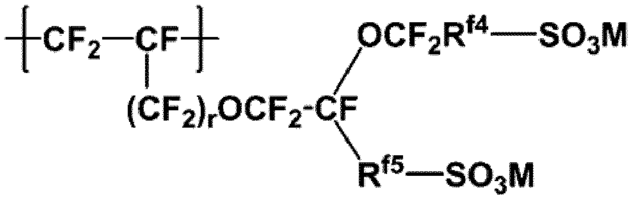

Formula (1-3-1)

$R^{f4}$ is a linear $C_{1-6}$ perfluoroalkylene group, $R^{f5}$ is a single bond or a linear $C_{1-6}$ perfluoroalkylene group which may contain an etheric oxygen atom. r and M are the same as defined above.

Specific examples of the units represented by the formula (1-3-1) include the following units.

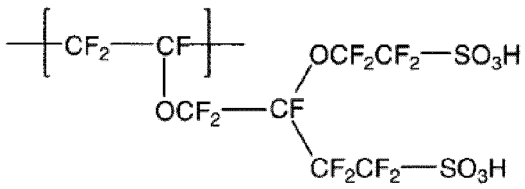

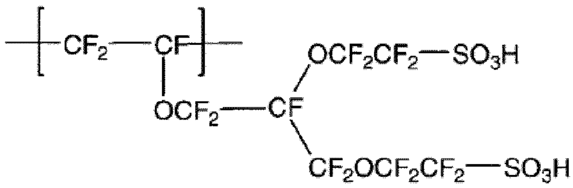

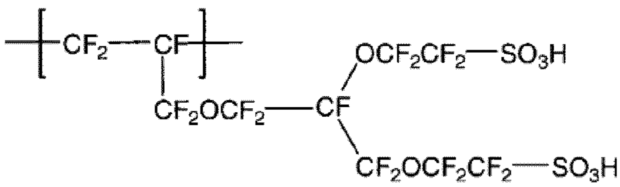

The units represented by the formula (1-4) are preferably units represented by the formula (1-4-1) wherein $R^{f1}$, $R^{f2}$ and M are the same as defined above.

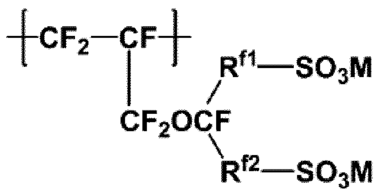

Formula (1-4-1)

Specific examples of the units represented by the formula (1-4-1) include the following units.

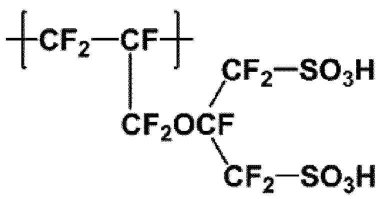

The units based on a fluorine-containing olefin having a sulfonic acid functional group may be a single species

or a combination of two or more species.

The fluorinated polymer (I) may comprise units based on an additional monomer other than units based on the fluoroolefin and units based on a fluorine-containing olefin having a sulfonic acid functional group.

The additional monomer may, for example, be $CF_2$=$CFR^{f6}$ (wherein $R^{f6}$ is a $C_{2-10}$ perfluoroalkyl group), $CF_2$=CF-$OR^{f7}$ (wherein $R^{f7}$ is a $C_{1-10}$ perfluoroalkyl group which may contain an etheric oxygen atom), $CF_2$=$CFO(CF_2)_vCF$=$CF_2$ (wherein v is an integer of from 1 to 3) or units containing a cyclic ether structure.

The fluorinated polymer (I) may further comprise at least one member selected from the group consisting of cerium and manganese in the form of a metal, a metal compound or a metal ion, to make it more durable in an operating fuel cell or water electrolyzer. Cerium atoms and manganese atoms are supposed to decompose hydrogen peroxide and hydroxyl radicals, hydroperoxyl radicals responsible for deterioration of the fluorinated polymer (I). The cerium or manganese in the form of a metal, a metal compound or a metal ion may be present in a component of a fuel cell such as a catalyst layer, a catalyst, a catalyst support, a microporous layer or a separator because cerium or manganese may dissolve from such a component and migrate into the fluorinated polymer (I) together with water during operation of the fuel cell.

The fluorinated polymer (I) may comprise silica or a heteropoly acid (such as zirconium phosphate, phosphomolybdic acid or phosphotungstic acid) as a humectant to prevent dehydration and chemical deterioration of the fluorinated polymer (I) during operation of a fuel cell or a water electrolyzer.

Although it is known that the use of the fluorinated polymer (I) mentioned above greatly reduces generation of an aliphatic hydrofluorocarbon compound having an ionic group in a fuel cell or a water electrolyzer, it is difficult to completely suppress generation of an aliphatic hydrofluorocarbon compound having an ionic group. Therefore, the present invention can attain the object of the present invention more effectively when combined with a fuel cell or a water electrolyzer comprising the fluorinated polymer (I) described above.

[Membrane Electrode Assembly]

The membrane electrode assembly described later comprises an anode having a catalyst layer comprising a catalyst and a polymer having ion exchange groups, a cathode having a catalyst layer comprising a catalyst and a polymer having ion exchange groups, and a polymer electrolyte membrane comprising a polymer having ion exchange groups disposed between the anode and the cathode. At least one of the polymer having ion exchange groups in the anode, the polymer having ion exchange groups in the cathode and the polymer having ion exchange groups in the polymer electrolyte membrane is the fluorinated polymer having ion exchange groups.

Hereinafter, an example of the membrane electrode assembly will be described by reference to the drawing.

Fig. 1 is a schematic cross-sectional view of an example of the membrane electrode assembly of the present invention. The membrane electrode assembly 10 comprises an anode 13 having a catalyst layer 11 and a gas diffusion layer 12, a cathode 14 having a catalyst layer 11 and a gas diffusion layer 12, and a polymer electrolyte membrane 15 disposed between the anode 13 and the cathode 14, in contact with the catalyst layers 11.

As specific examples of the catalyst in the catalyst layer 11, a supported catalyst having platinum, a platinum alloy or a platinum-based core-shell catalyst supported on a carbon or metal oxide carrier, an iridium oxide catalyst, an iridium oxide alloy-based catalyst and an iridium oxide-based core-shell catalyst may be mentioned. As the carbon carrier, carbon black powder may be mentioned.

As the polymer having ion exchange groups in the catalyst layer 11, a fluoropolymer having ion exchange groups may be mentioned, and it is also preferred to use the fluorinated polymer (S).

The gas diffusion layers 12 have a function to uniformly diffuse gas through the catalyst layers and a function as current collectors. The gas diffusion layers may, for example, be carbon paper, carbon cloth, carbon felt or porous titanium (such as sintered product of titanium particles or fibers).

The gas diffusion layers may have a water-repellent or hydrophilic finish of PTFE or the like or a hydrophilic finish of a polymer ion exchange groups, to prevent adhesion of generated gases.

Although the membrane-electrode assembly shown in Fig. 1 comprises gas diffusion layers 12, gas diffusion layers are optional, and hence the membrane-electrode assembly may comprise no gas diffusion layers.

The polymer having ion exchange groups in the polymer electrolyte membrane 15 is preferably the fluorinated polymer (S).

The anode 13 and the cathode 14 may comprise additional parts other than those described above.

Such additional parts include, for example, carbon layers (not shown) disposed between the catalyst layers 11 and the gas diffusion layers 12. Carbon layers facilitate diffusion of gas the surfaces of the catalyst layers 11 and substantially improve the power generation performance of the fuel cell.

The carbon layers contain, for example, carbon and a nonionic fluoropolymer. A preferred example of the carbon is a carbon nanofiber having a diameter of from 1 to 1,000 nm and a fiber length of at most 1,000 μm. The nonionic fluoropolymer may, for example, be polytetrafluoroethylene.

The membrane-electrode assembly may be produced, for example, by forming catalyst layers on a polymer electrolyte membrane and sandwiching the resulting assembly between gas diffusion layers, or by forming catalyst layers on gas diffusion layers to form electrodes (an anode and a cathode) and sandwiching a polymer electrolyte membrane between the electrodes.

The catalyst layers may be formed by applying a catalyst layer coating liquid to the surface to be coated, followed by drying, if necessary. The catalyst layer coating liquid is a dispersion of a polymer having ion exchange groups in a dispersion medium.

EXAMPLES

Now, the present invention will be described in further detail with reference to Examples. Examples 1, 5 and 6 are working Examples, while Examples 2 to 4 are comparative Examples. It should be understood that the present invention is by no means restricted thereto.

[Packing of Column with Ion Exchange Resin]

A given amount of a resin (ion exchange resin) was soaked in ultrapure water in a measuring cylinder overnight, and the volume of the resin was measured using the graduations on the cylinder. The resin was transferred into a recovery flask with the ultrapure water and degassed under a vacuum created using a vacuum pump. The resin was poured into a PFA column (chromatographic column TK type, manufactured by FLON INDUSTRY) together with the ultrapure water, and the length of the resin bed (the height of the resin layer) was measured after tapping on the column to constant resin bed length.

[Pretreatment of Ion Exchange Resin]

The column packed with the resin (ion exchange resin) was connected to a tube (PFA tube, or PharMed® BPT manufactured by Saint-Gobain), and the treatment target solution described below was passed through the column at room temperature (23°C) using a tubing pump (NRP-3000, manufactured by EYELA).

When the resin was a tertiary amine resin (resin having tertiary amino groups), the column was washed by passing ultrapure water with a throughput speed of SV = 100 $Hr^{-1}$ and a throughput of BV = 100.

When the resin was a quaternary ammonium ion resin (resin having quaternary ammonium ions), the resin was converted to the OH- form by passing 1N NaOH (for medicine analysis, manufactured by KANTO CHEMICAL CO., INC.) with a throughput speed of SV = 4 $Hr^{-1}$ and a throughput of BV = 6 and then washed by passing ultrapure water twice with a throughput speed of SV = 4 $Hr^{-1}$ and a throughput of BV = 1.5 for the first washing and with a throughput speed of SV = 100 $Hr^{-1}$ and a throughput of BV = 50 for the second washing.

The basic information on the ion exchange resins used in the Examples is shown below.

- Tertiary amine resin (DIAION WA30, manufactured by Mitsubishi Chemical Corporation, matrix resin: styrene resin, classification: weak base, MR type, functional group: $-N(CH_3)_2$)
- Quaternary ammonium ion resin (Amberlite IRA900J Cl, manufactured by ORGANO CORPORATION, matrix resin: styrene resin, classification: strong base, MR type, functional group: $-N(CH_3)_3Cl$)

[Preparation of $HOOC-CF(CF_3)-O-CF_2-CF_2-SO_3H$ (Adsorbate 1)]

$FOC-CF(CF_3)-O-CF_2-CF_2-SO_2F$ was synthesized by a known method (specifically speaking, as described in Macromolecules, 2002, Volume 35, No. 4, 1403-1411) and purified by distillation to a purity of 99.5%. 20.00 g of $FOC-CF(CF_3)-O-CF_2-CF_2-SO_2F$ was put into a 200-mL three-necked PFA resin flask equipped with a stirrer, a condenser and a dropping funnel, and a liquid mixture of 9.27 g of NaOH and 58.02 g of ultrapure water was added from the dropping funnel while the three-necked flask was cooled in an ice bath. Then, the reaction solution was heated at 65°C for 1 hour, and after addition of 28.8 g of ethanol, was heated at 70°C for 2 hours. The reaction solution was cooled and analyzed by $^{19}F$-NMR. It was confirmed that the hydrolysis went to completion by the absence of $SO_2F$ groups and COF groups. The sodium fluoride produced as a by-product was removed by suction filtration and washed with ultrapure water. The washing was combined with the filtrate.

An ion exchange resin (DOWEX MONOSPHERE® 650C(H) Cation Exchange Resin) was washed with aqueous hydrochloric acid, ethanol and ultrapure water, and 139 g of the resin was weight out into a PFA container and mixed with the filtrate. The mixture was stirred slowly for 12 hours at 23°C for ion exchange. The ion exchange resin was filtered off, and the filtrate was dried into a solid. The resulting solid was dissolved by adding 65.3 g of chloroform and 17.5 g of acetonitrile, and the resulting solution was filtered through a 0.5 μm membrane filter (made of PTFE). The filtrate was

dried into a solid by removing chloroform and acetonitrile to obtain HOOC-CF($CF_3$)-O-$CF_2$-$CF_2$-$SO_3H$ as a white solid. The solid was very hygroscopic. The solid was diluted with ultrapure water to prepare an aqueous solution containing HOOC-CF($CF_3$)-O-$CF_2$-$CF_2$-$SO_3H$ and water. The solution was quantitatively analyzed by $^{19}$F-NMR as described later (with a repetition time of 60 seconds) to measure the concentration of HOOC-CF($CF_3$)-O-$CF_2$-$CF_2$-$SO_3H$ in the solution from comparing the integral of the peak at -77.7 ppm with the integral of the peak from HFIP (1,1,1,3,3,3-hexafluoro-2-propanol) as the internal standard at -75.1 ppm. Triplicate measurements averaged out at 32.1 mass%. Hereinafter, HOOC-CF($CF_3$)O-$CF_2$-$CF_2$-$SO_3H$ is referred to as Adsorbate 1.

[Preparation of HOOC-CF($CF_2$-O-$CF_2$-$CF_2$-$SO_3H$)-O-$CF_2$-$CF_2$-$SO_3H$ (Adsorbate 2)]

FOC-CF($CF_2$-O-$CF_2$-$CF_2$-$SO_2F$)-O-$CF_2$-$CF_2$-$SO_2F$ was synthesized by a known method (specifically speaking, as described in Japanese Patent No. 5286797) and purified by distillation to a purity of 99.4%. 19.75 g of FOC-CF($CF_2$-O-$CF_2$-$CF_2$-$SO_2F$)-O-$CF_2$-$CF_2$-$SO_2F$ was put into a 500-mL three-necked PFA resin flask equipped with a stirrer, a condenser and a dropping funnel, and a liquid mixture of 12.14 g of NaOH and 76.53 g of ultrapure water was added from the dropping funnel while the three-necked flask was cooled in an ice bath. Then, the reaction solution was heated at 65°C for 1.5 hours. The reaction solution was cooled and analyzed by $^{19}$F-NMR. It was confirmed that the hydrolysis went to completion by the absence of $SO_2F$ groups and COF groups. The sodium fluoride produced as a by-product was removed by suction filtration and washed with ultrapure water. The washing was combined with the filtrate. 88.03 g of the filtrate was diluted with ultrapure water to make a total of 434.3 g.

60 cc of an ion exchange resin (DOWEX MONOSPHERE® 650C(H) Cation Exchange Resin) was poured into a PFA column to a resin bed height of 38 cm. The column was pretreated by passing ultrapure water at SV = 20 $Hr^{-1}$ for 1 hour, 1 N HCl at SV = 13.3 $Hr^{-1}$ for 1 hour and then ultrapure water at SV = 20 $Hr^{-1}$ for 1 hour. The diluted reaction solution was circulated through the pretreated column at SV = 20 $Hr^{-1}$ for 26 hours to obtain an aqueous solution containing HOOC-CF($CF_2$-O-$CF_2$-$CF_2$-$SO_3H$)-O-$CF_2$-$CF_2$-$SO_3H$ and water. The solution was quantitatively analyzed by $^{19}$F-NMR (with a repetition time of 60 seconds) to measure the concentration of HOOC-CF($CF_2$-O-$CF_2$-$CF_2$-$SO_3H$)-O-$CF_2$-$CF_2$-$SO_3H$ in the solution from comparing the integral of the peak at -79.7 ppm with the integral of the peak from HFIP (1,1,1,3,3,3-hexafluoro-2-propanol) as the internal standard at -75.1 ppm. Triplicate measurements averaged out at 5.5 mass%. Hereinafter, HOOC-CF($CF_2$-O-$CF_2$-$CF_2$-$SO_3H$)-O-$CF_2$-$CF_2$-$SO_3H$ is referred to as Adsorbate 2.

<$^{19}$F-NMR>

$^{19}$F-NMR analyses were carried out at a frequency of 282.7 MHz, using $CD_3CN$ as the solvent and $CFCl_3$ as the chemical shift reference standard. The products were determined from the $^{19}$F-NMR spectra and the amount of the internal standard (HFIP).

[Preparation of Treatment Target Solution]

A given amount of an aqueous solution of an adsorbate was diluted with ultrapure water to a predetermined concentration. The aqueous solution was degassed by sonication under a reduced pressure created by a vacuum pump, and HF (47 mass%, analytical grade, manufactured by FUJIFILM Wako Pure Chemical Corporation) and $H_2SO_4$ (95 mass%, analytical grade, manufactured by Junsei Chemical Co., Ltd.) were added to a concentration of 1 ppm, respectively, and the resulting solution was circulated in the container to homogeneity using a tubing pump (NRP-3000, manufactured by EYELA, tube: PharMed® BPT manufactured by Saint-Gobain) to obtain a treatment target solution.

[Purification Step]

A treatment target solution was passed through a column packed with a pretreated ion exchange resin at room temperature (23°C). Specifically speaking, the treatment target solution was passed at SV = 100 $Hr^{-1}$ for 30 minutes, and after adjustment of the feed rate, the treatment target solution was passed at SV = 200 $Hr^{-1}$ for 30 minutes. Then, the effluent (hereinafter referred to as "purified liquid") was collected in a PP bottle. The throughput BV was 150.

[Determination of Adsorbate in Treatment Target Solution and Purified Liquid]

The adsorbate in a treatment target solution and a purified liquid was determined by liquid chromatography / mass spectrometry (LC/MS/MS). For example, when the adsorbate was Adsorbate 1, the following measurement conditions were used.

<LC conditions>

Thermo Fisher Scientific, Vanquish
Analytical column: YMC-Triart C18 (150 mm × 2.1 mm ID, S-μm 12 mm)
Mobile phase A: 20 mM ammonium acetate pH 6.56
Mobile phase B: Methanol
Gradient B%: 0% (0 min) - 90% (4-12 min) - 0% (12.1-20 min)
Flow rate: 0.3 m L/min
Oven temperature: 40°C

<MS conditions>

Thermo Fisher Scientific, TSQ Altis
Ion Source Type: H-ESI
SRM Polarity: Negative

For example, when the adsorbate was Adsorbate 1 (HOOC-CF($CF_3$)-O-$CF_2$-$CF_2$-SOsH), the adsorbate was determined as described below.

<Preparation of Calibration Curve for Adsorbate 1>

An aqueous solution of HOOC-CF($CF_3$)-O-$CF_2$-$CF_2$-$SO_3H$ having a known concentration was diluted with ultrapure water to obtain standard solutions having concentrations of 100 ppb, 10 ppb, 1 ppb, 100 ppt, 90 ppt, 80 ppt, 70 ppt, 60 ppt, 50 ppt, 40 ppt, 30 ppt, 20 ppt and 10 ppt.

Each standard solution was analyzed by LC/MS/MS under the above-mentioned LC conditions and MS conditions, and the areas of the peak detected at a retention time between 2.7 minutes and 3.0 minutes under the following conditions was calculated.

Precursor (m/z): 340.93
Product (m/z): 296.958, Collision Energy (V): 18.94, RF Lens (V): 30

The peak areas for the standard solutions were plotted against concentrations, and the straight line obtained by linear approximation was used as the calibration curve.

<Determination of Adsorbent 1 in Purified Liquid>

A purified liquid was analyzed by LC/MS/MS under the above-mentioned LC conditions and MS conditions, and the area of the peak detected at a retention time between 2.7 minutes and 3.0 minutes under the following conditions was calculated.

Precursor (m/z): 340.93
Product (m/z): 296.958, Collision Energy (V): 18.94, RF Lens (V): 30

The concentration of Adsorbate 1 in the purified liquid was obtained from the peak area and the calibration curve.

For example, when the adsorbate was Adsorbate 2 (HOOC-CF($CF_2$-O-$CF_2$-$CF_2$-$SO_3H$)-O-$CF_2$-$CF_2$-$SO_3H$), the adsorbate was determined as described below.

<LC conditions>

Instrument: Prominence, manufactured by Shimadzu Corporation
Analytical column: RESTEK Raptor Polar X (100 mm × 2.1 mm ID, S-2.7 μm)
Mobile phase A: 5 mM ammonium acetate in $H_2O$/Acetonitrile (95/5 vol%)

Mobile phase B: 5 mM ammonium acetate in Acetonitrile/$H_2O$ (95/5vol%)
Gradient B%: 100% (2 min) - 0% (10-15 min) - 100% (16-23 min)
Flow rate: 0.3 mL/min
Oven temperature: 40°C

<MS conditions>

Instrument: ABSCIEX, 4000QTRAP system
Ion Source Type: ESI
MRM Polarity: Negative

For example, when the adsorbate was Adsorbate 2 (HOOC-CF($CF_2$-O-$CF_2$-$CF_2$-$SO_3H$)-O-$CF_2$-$CF_2$-$SO_3H$), the adsorbate was determined as described below.

<Preparation of Calibration Curve for Adsorbate 2>

An aqueous solution of HOOC-CF($CF_2$-O-$CF_2$-$CF_2$-$SO_3H$)-O-$CF_2$-$CF_2$-$SO_3H$ having a known concentration was diluted with ultrapure water to obtain standard solutions having concentrations of 27.5 ppb, 5.5 ppb, 2.75 ppb, 550 ppt, 275 ppt and 55 ppt.

Each standard solution was analyzed by LC/MS/MS under the above-mentioned LC conditions and MS conditions, and the areas of the peak detected at a retention time between 5.1 minutes and 5.6 minutes under the following conditions was calculated.

Precursor (m/z): 518.9
Product (m/z): 375.0, Collision Energy (V): 40

The peak areas for the standard solutions were plotted against concentrations, and the straight line obtained by linear approximation was used as the calibration curve.

<Determination of Adsorbent 2 in Purified Liquid>

A purified liquid was analyzed by LC/MS/MS under the above-mentioned LC conditions and MS conditions, and the area of the peak detected at a retention time between 5.1 minutes and 5.6 minutes under the following conditions was calculated.

Precursor (m/z): 518.9
Product (m/z): 375.0, Collision Energy (V): 40,

The concentration of Adsorbate 2 in the purified liquid was obtained from the peak area and the calibration curve.

[EXAMPLE 1]

A PFA column (TKB-830, manufactured by FLON INDUSTRY, inner diameter 8 mm, length 30 cm) was packed with 7.7 mL of a tertiary amine resin (DIAION WA30, manufactured by Mitsubishi Chemical Corporation) to a resin bed length (the height of the resin layer) of 15.0 cm.

An aqueous solution of Absorbate 1 having a known concentration was diluted with ultrapure water to 100 ppb, and HF (47 mass%, analytical grade, manufactured by FUJIFILM Wako Pure Chemical Corporation) and $H_2SO_4$ (95 mass%, analytical grade, manufactured by Junsei Chemical Co., Ltd.) were added to a concentration of 1 ppm, respectively to obtain treatment target solution 1-1. Treatment target solution 1-1 was passed through the column at room temperature (23°C). The concentration of Adsorbate 1 in the purified liquid was 29 ppt.

[EXAMPLE 2]

A purified liquid was obtained in the same manner as in Example 1 except that the addition of HF and $H_2SO_4$ in preparation of treatment target solution 1-1 was omitted. The concentration of Adsorbate 1 in the purified liquid obtained in Example 2 was 223 ppt.

[EXAMPLE 3]

A purified liquid was obtained in the same manner as in Example 1 except that the tertiary amine resin was replaced by a quaternary ammonium ion resin (Amberlite IRA900J Cl, manufactured by ORGANO CORPORATION). The concentration of Adsorbate 1 in the purified liquid obtained in Example 3 was 206 ppt.

[EXAMPLE 4]

A purified liquid was obtained in the same manner as in Example 3 except that the addition of HF and $H_2SO_4$ in preparation of treatment target solution 1-1 was omitted. The concentration of Adsorbate 1 in the purified liquid obtained in Example 4 was 175 ppt.

[EXAMPLE 5]

A PFA column (TKB-830, manufactured by FLON INDUSTRY, inner diameter 8 mm, length 30 cm) was packed with 7.7 mL of a tertiary amine resin (DIAION WA30, manufactured by Mitsubishi Chemical Corporation) to a resin bed length (the height of the resin layer) of 15.0 cm.

An aqueous solution of Absorbate 2 having a known concentration was diluted with ultrapure water to 100 ppb, and HF (47 mass%, analytical grade, manufactured by FUJIFILM Wako Pure Chemical Corporation) and $H_2SO_4$ (95 mass%, analytical grade, manufactured by Junsei Chemical Co., Ltd.) were added to a concentration of 1 ppm, respectively to obtain treatment target solution 2-1. Treatment target solution 2-1 was passed through the column at room temperature (23°C). The concentration of Adsorbate 2 in the purified liquid was lower than 100 ppt.

[Additional Embodiment]

A membrane electrode assembly comprising a polymer comprising TFE units and units represented by $-[CF_2-CF(-O-CF_2CF(CF_3)-O-(CF_2)_2-SO_3H)]-$ is fabricated, and the membrane-electrode assembly is mounted in a power generation cell. With the power generation cell, the open circuit voltage test (OCV test) described blow is conducted.

Hydrogen (utilization rate 50%) and air (utilization rate 50%) equivalent to a current density of 0.2 $A/cm^2$ are supplied to the anode and the cathode, respectively, at an ordinary pressure, and the cell is operated under open circuit conditions without power generation at a cell temperature of 90°C, at an anode gas dew point temperature of 61°C and a cathode gas dew point temperature of 61°C. The gas and liquid discharged from the cell are trapped into 0.1 mol/L aqueous potassium hydroxide for 24 hours. The aqueous potassium hydroxide is filtered through a cation ion exchange resin filter to obtain a filtrate containing F-, $SO_4^{2-}$ and Adsorbate 1, which is referred to as treatment target solution 6.

A PFA column (TKB-830, manufactured by FLON INDUSTRY, inner diameter 8 mm, length 30 cm) is packed with 7.7 mL of a tertiary amine resin (DIAION WA30, manufactured by Mitsubishi Chemical Corporation) to a resin bed length (the height of the resin layer) of 15.0 cm.

Treatment target solution 6 is passed through the column at room temperature (23°C). The concentration of Adsorbate 1 in the purified liquid is lower than 100 ppt.

Examples 1 to 4 demonstrate that the addition of HF and $H_2SO_4$ and the use of a tertiary amine ion exchange resin makes it possible to remove Adsorbate 1 efficiently from an aqueous solution containing Adsorbate 1 to such a level that the concentration of Adsorbate 1 in the purified liquid is lower than 100 ppt (as in Example 1).

Example 5 demonstrates that the addition of HF and $H_2SO_4$ and the use of a tertiary amine ion exchange resin makes it possible to remove Adsorbate 2 efficiently from an aqueous solution containing Adsorbate 2 to such a level that the concentration of Adsorbate 2 in the purified liquid is lower than 100 ppt

The entire disclosure of Japanese Patent Application No. 2021-168381 filed on October 13, 2021 including specification, claims, drawings and summary is incorporated herein by reference in its entirety.

## Claims

1. A method for purifying a treatment target solution, which comprises bringing a treatment target solution containing a compound having an aliphatic hydrocarbon group which has at least one ionic group selected from the group consisting of a carboxylic acid group and a sulfonic acid group, and a fluorine atom and may contain an oxygen atom, at least one acid selected from the group consisting of HF and $H_2SO_4$ and water, into contact with a resin having a tertiary amino group to remove the compound having an aliphatic hydrocarbon group from the treatment target solution.

2. The method for purifying a treatment target solution according to Claim 1, wherein the treatment target solution is purified until the concentration of the compound having an aliphatic hydrocarbon group becomes 100 ppt or below.

3. The method for purifying a treatment target solution according to Claim 1 or 2, wherein the compound having an aliphatic hydrocarbon group is represented by the following formula (X):

Formula (X): $(HOOC)_m\text{-}L\text{-}(SO_3H)_n$

(wherein L is a (m+n)-valent aliphatic hydrocarbon group which contains a fluorine atom and may contain an oxygen atom, n is an integer of from 0 to 2, and m is an integer of from 0 to 3, provided that the sum of m and n is at least 1.)

4. The method for purifying a treatment target solution according to Claim 3, wherein m is 1, and n is 1.

5. The method for purifying a treatment target solution according to Claim 3, wherein m is 0, and n is 1.

6. The method for purifying a treatment target solution according to Claim 3, wherein m is 1, and n is 2.

7. The method for purifying a treatment target solution according to any one of Claims 1 to 6, wherein the treatment target solution is produced by an electrochemical reaction in a fuel cell or a water electrolyzer which comprises a fluorinated polymer having ion exchange groups.

8. The method for purifying a treatment target solution according to Claim 7, wherein the treatment target solution is produced by an electrochemical reaction in a fuel cell or a water electrolyzer which comprises a fluorinated polymer having ion exchange groups, and is discharged from the fuel cell or the water electrolyzer.

9. The method for purifying a treatment target solution according to any one of Claims 1 to 8, wherein the tertiary amino group is represented by $-NR^{N1}R^{N2}$ (wherein each of $R^{N1}$ and $R^{N2}$ is independently a monovalent group).

10. The method for purifying a treatment target solution according to Claim 9, wherein the monovalent group as $R^{N1}$ and $R^{N2}$ is an alkyl group, an alkenyl group, an aryl group, an acetyl group, a benzoyl group, a benzensulfonyl group or a tert-butoxycarbonyl group which may contain an etheric oxygen atom or a hydroxy group.

11. The method for purifying a treatment target solution according to Claim 9 or 10, wherein each of $R^{N1}$ and $R^{N2}$ independently has from 1 to 10 carbon atoms.

12. The method for purifying a treatment target solution according to any one of Claims 1 to 11, wherein the resin having a tertiary amino group is based on at least one of a styrene resin and a (meth)acrylic resin.

13. The method for purifying a treatment target solution according to any one of Claims 1 to 12, wherein the treatment target solution is passed through a container packed with the resin having a tertiary amino group by feeding the treatment target solution into the container at a throughput speed SV of from 1 $Hr^{-1}$ to 400 $Hr^{-1}$, which is represented by the following formula.

$$SV\ (Hr^{-1}) = \text{Feed rate}\ (mL\cdot Hr^{-1}) / \text{Resin volume}\ (mL)$$

14. The method for purifying a treatment target solution according to Claim 13, wherein the throughput speed SV is set so that the concentration of the fluoroalkyl compound having an ionic group is at most 100 ppt when the total feed BV of the treatment target solution, which is represented by the following formula, reaches 20,000.

$$BV = \text{Total feed}\ (mL) / \text{Resin volume}\ (mL)$$

Fig. 1

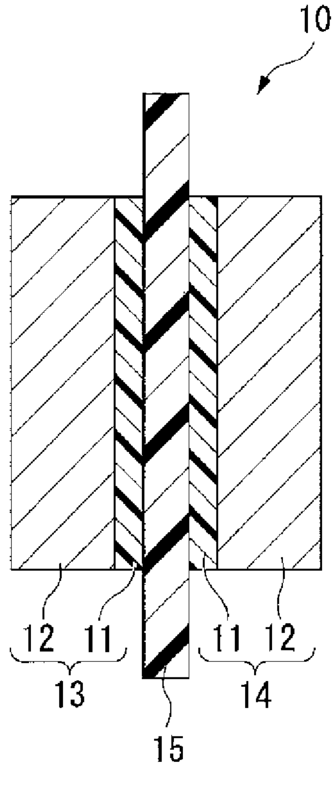

## INTERNATIONAL SEARCH REPORT

International application No.
**PCT/JP2022/037992**

**A. CLASSIFICATION OF SUBJECT MATTER**

***C02F 1/42***(2023.01)i; ***B01J 41/07***(2017.01)i; ***B01J 41/13***(2017.01)i; ***H01M 8/04***(2016.01)i; ***H01M 8/06***(2016.01)i; ***H01M 8/10***(2016.01)i
FI: C02F1/42 D; B01J41/07; B01J41/13; H01M8/04 Z; H01M8/06; H01M8/10 101

According to International Patent Classification (IPC) or to both national classification and IPC

**B. FIELDS SEARCHED**

Minimum documentation searched (classification system followed by classification symbols)

C02F1/28, 42, B01J20/00-34, 39/00-49/90, H01M8/00-2495

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-519517 A (LANXESS DEUTSCHLAND GMBH) 30 May 2013 (2013-05-30) paragraphs [0001]-[0052] | 1-14<br>1-14 |
| X<br>Y | JP 2002-59160 A (DAIKIN INDUSTRIES, LTD.) 26 February 2002 (2002-02-26) paragraphs [0018]-[0066] | 1-14<br>1-14 |
| Y | WO 2007/043278 A1 (ASAHI GLASS CO., LTD.) 19 April 2007 (2007-04-19) paragraphs [0009]-[0032] | 1-14 |
| A | JP 2014-508786 A (EVONIK DEGUSSA GMBH) 10 April 2014 (2014-04-10) paragraph [0033] | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2022** | **20 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/037992**

| Patent document cited in search report | Publication date (day/month/year) | Patent family member(s) | Publication date (day/month/year) |
|---|---|---|---|
| JP 2013-519517 A | 30 May 2013 | US 2013/0168319 A1<br>paragraphs [0001]-[0061]<br>WO 2011/101342 A1<br>CN 102762304 A | |
| JP 2002-59160 A | 26 February 2002 | US 2004/0010156 A1<br>paragraphs [0022]-[0102]<br>WO 2002/014223 A1<br>EP 1323677 A1<br>CN 1446181 A | |
| WO 2007/043278 A1 | 19 April 2007 | US 2008/0182913 A1<br>paragraphs [0015]-[0056]<br>EP 1935490 A1<br>CN 101282788 A | |
| JP 2014-508786 A | 10 April 2014 | US 2014/0024849 A1<br>paragraph [0034]<br>WO 2012/126699 A1<br>DE 102011006053 A1<br>CN 103429602 A<br>KR 10-2014-0008392 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5806205 B
- JP 5286797 B
- JP 2021168381 A


### Non-patent literature cited in the description


- *Macromolecules,* 2002, vol. 35 (4), 1403-1411